**Europäisches Patentamt**

**European Patent Office**

**Office européen des brevets**

(19)

(11) Veröffentlichungsnummer: **0 219 024 B1**

# EUROPÄISCHE PATENTSCHRIFT

(45) Veröffentlichungstag der Patentschrift: **27.12.91**

(51) Int. Cl.5: **C09K 21/00**

(21) Anmeldenummer: **86113791.7**

(22) Anmeldetag: **04.10.86**

(54) **Brandschutzmaterial.**

(30) Priorität: **15.10.85 DE 3536625**

(43) Veröffentlichungstag der Anmeldung:
**22.04.87 Patentblatt 87/17**

(45) Bekanntmachung des Hinweises auf die
Patenterteilung:
**27.12.91 Patentblatt 91/52**

(84) Benannte Vertragsstaaten:
**AT BE CH DE ES FR GB IT LI NL SE**

(56) Entgegenhaltungen:
**EP-A- 0 120 253**
**DE-A- 3 534 706**
**FR-A- 2 315 489**
**US-A- 3 782 475**

(73) Patentinhaber: **Chemische Fabrik Grünau
GmbH
Robert-Hansen-Strasse 1
W-7918 Illertissen(DE)**

(72) Erfinder: **Annemaier, Dieter, Dr.
Hauffstr. 15
W-7901 Oberkirchberg(DE)**
Erfinder: **Graf, Robert
Illertalstr. 9
W-7919 Altenstadt(DE)**
Erfinder: **Keipl, Stefan
Schönebergstr. 26
W-7919 Bellenberg(DE)**

(74) Vertreter: **Patentanwälte RUFF, BEIER und
SCHÖNDORF
Neckarstrasse 50
W-7000 Stuttgart 1(DE)**

## Beschreibung

Die Erfindung betrifft ein wasser- und witterungsbeständiges Brandschutzmaterial in loser Form, insbesondere in einer flexiblen, nicht vollständig gefüllten Verpackung.

Das Baurecht verlangt für zahlreiche Bauteile, wie Wände, Decken und leichte Trennwände Mindestfeuerwiderstandsdauern. Wenn sich in diesen Bauteilen Öffnungen oder Durchbrüche für Installationen befinden, so zum Beispiel für die Hindurchführung von Kabeln, Rohren und Lüftungsleitungen, dann besteht die Gefahr der Brandweiterleitung durch diese Durchbrüche hindurch in die nächsten Bauabschnitte und Gebäude. Deshalb wurden früher solche Öffnungen und Durchbrüche nach Abschluß der Installationsarbeiten vermörtelt, was große Erschwerungen beim Nachziehen neuer Kabel, Leitungen und Rohre zur Folge hat. Frei von dieser Erschwerung waren "AsbestSäckchen" in Form von Säckchen oder Beuteln aus Asbestgewebe mit Füllungen aus loser Asbestfaser. Diese Säckchen werden in den letzten Jahren immer weniger eingesetzt, nachdem die gesundheitsschädigende Wirkung von Asbestfasern erkannt ist.

Weiterhin sind Polyäthylen-Säckchen mit Mineralfaserfüllung bekannt. Die Hülle ist brennbar und kann das Feuer durch den Durchbruch hindurchleiten. Wird die Polyäthylenhülle durch Feuer oder durch im Brand herabfallende Teile zerstört, so besteht die Gefahr der Undichtigkeit des Durchbruches durch Auslaufen oder Herabfallen der nicht mehr zusammengehaltenen Mineralfasern. Ähnliches gilt für Leinwand-Säckchen mit Mineralfaserfüllung.

Jutesäckchen, gefüllt mit Mineralfasern und beschichtet mit einer Brandschutzbeschichtung aus dämmschichtbildendem Material sind dicht. Hier kann die Brandweiterleitung trotz des an sich brennbaren Hüllenmaterials dadurch verhindert werden, daß das dämmschichtbildende Material im Feuer einen Dämmschaum ausbildet. Da die dämmschichtbildenden Brandschutzbeschichtungen jedoch nicht wasserfest sind und innerhalb von 10 bis 48 Stunden durch Wasser zerstört werden, versagen diese beschichteten Säckchen in Feuchträumen, insbesondere auf Baustellen, auf denen permanent mit Regenwasser und sonstigen Wasseranfällen durch Reinigungs- ,Vermörtelungs-und Verputzarbeiten zu rechnen ist.

Ein Wärmeschutzmaterial bestehend aus einem porösen Kernmaterial, das mit einem in der Hitze aufschäumenden anorganischen Material imprägniert oder überzogen wurde, ist in FR-A-2 315 489 beschrieben. Es wird in Harze eingearbeitet, zur Herstellung von festen Bauteilen. Die genannten anorganischen Materialien sind nicht wasser- und bewitterungsbeständig und die Zusammensetzung enthält kein wärmewirksames Bindemittel.

Intumeszenzmassen, die ggf. geschäumt sein können, hergestellt durch Umsetzung von organischen Verbindungen wie Polyisocyanaten, Polyethern, Polyestern, Melamin-Phosphaten, ggf. Wasser und mit Isocyanaten reagierenden Verbindungen, geeignet zur Herstellung von Formteilen, werden in EP-A-0 120 253 beschrieben. Anorganische Materialien sind ggf. nur in geringen Mengen enthalten.

Der Erfindung liegt die Aufgabe zugrunde, in der Handhabung physiologisch unbedenkliche Brandschutzmaterialien zu schaffen, die den Anforderungen des baulichen Brandschutzes genügen und zusätzlich den harten Anforderungen der Praxis standhalten.

Das erfindungsgemäße Brandschutzmaterial ist dadurch gekennzeichnet, daß es mindestens ein bei Temperaturen bis 1100 °C wärmeisolierendes Material in Form von nicht brennbaren, pulverförmigen, körnigen und/oder faserförmigen Stoffen auf anorganischer Basis, mindestens ein sich bei Temperaturen über 150 °C, insbesondere über 200 °C, irreversibel ausdehnendes Material auf Basis von anorganischen, nicht brennbaren Verbindungen oder Materialien oder Mischungen hieraus und/oder organischen wasserbeständigen, bei erhöhter Temperatur quellenden, insbesondere sich unter Bildung eines Kohlenstoffgerüstes bzw. Kohlenstoffschaumes zersetzenden Verbindungen, und mindestens ein vorzugsweise feinteiliges Bindemittel, das bei Temperaturen bei 100 bis 300 °C wärmewirksam ist und die anderen Komponenten verklebt, enthält, wobei das wärmeisolierende und das sich ausdehnende Material zu mehr als 90 Gew.-Prozent im Brandschutzmaterial enthalten sind, und das Brandschutzmaterial ein Ausdehnungsvermögen beim Erhitzen von Raumtemperatur auf 1100 °C von mindestens 5 Vol.-Prozent besitzt und sämtliche Bestandteile zumindest im noch nicht erhitzten Zustand wasser- und bewitterungsbeständig sind.

Das erfindungsgemäße Brandschutzmaterial, das vorzugsweise vollständig asbestfrei ist, kann in loser Form in Hohlräume geschüttet werden, ist jedoch vorzugsweise in flexible, insbesondere kissenförmige Hüllen abgepackt, wodurch es leichter handhabbar ist. Außerdem können diese Kissen, ähnlich wie Sandsäcke bei der Dammbildung, bausteinartig übereinandergeschichtet werden, so daß auch größere Öffnungen bzw. Durchbrüche verschlossen werden können. Bei Hitzeeinwirkung dehnt sich das Brandschutzmaterial aus und dichtet dadurch eine damit verschlossene Öffnung ab, so daß nicht nur die Brandfront aufgehalten werden kann, sondern auch verhindert werden kann, daß schädliche Gase durch die Brandschutzschicht hindurchdringen können. Der Vorteil der Erfindung liegt insbesondere darin, daß das Brandschutzmaterial auch durch lange andauernde Witterungs- und Wassereinwirkung nicht verändert und vor allem brandschutztechnisch nicht verschlechtert wird. Das wärmeisolierende Material ist bis zu Temperaturen von mindestens 700 °C, insbesondere Temperaturen bis 1100 °C hitzefest und besitzt dabei wärmeisolierende Eigenschaften. Diese sind vorzugsweise auch schon bei Normaltemperatur gegeben, können bei einer Ausführungsform sich jedoch auch erst im Laufe der Hitzeeinwirkung entwickeln. Das sich unter Wärmeeinwirkung ausdehnende Material quillt bzw. dehnt sich aus, vorzugsweise im Temperaturbereich zwischen 200 und 1000 °C. Dadurch wird erreicht, daß die oben erwähnte Abdichtung frühzeitig erfolgt, so daß ein guter Schutz von wärmeempfindlichen Materialien, die von dem Brandschutzmaterial umgeben sind, erzielt wird.

Das wärmewirksame Bindemittel entwickelt verklebende Eigenschaften bei Temperaturen über 100 °C. Dadurch wird sichergestellt, daß das Brandschutzmaterial für die Handhabung beweglich bleibt. Im Brandfalle, d.h. unter Hitzeeinwirkung jedoch nicht mehr fließend ist.

Insbesondere dann, wenn die Hülle porös ist, enthält das Brandschutzmaterial mit Vorteil noch ein Entstaubungsmittel. Dieses kann elektrostatische Bindeeigenschaften besitzen, ist jedoch einfacherweise flüssig und/oder klebrig. Bereits geringe Mengen des Entstaubungsmittels im Bereich von 0,5 - 5 Gew.-Prozent, insbesondere 1 - 3 Gew.-Prozent, sind ausreichend, um eine staubfreie Handhabung des Brandschutzmaterials sicherzustellen. Geeignete Entstaubungsmittel sind beispielsweise Mineral- und/oder Silikonöl.

Die Hülle ist zweckmäßigerweise mindestens schwer entflammbar, vorzugsweise nicht brennbar. Sie kann aus anorganischem Fasermaterial bestehen, das in Form eines Gewebes, Gewirkes oder Vlieses vorliegt, wobei ein Gewebe bevorzugt ist. Glasfasern sind hierfür geeignet, es kommen aber auch wärmebeständigere Fasern, wie Mineralfasern, z.B. Basaltfasern, oder keramische Fasern in Frage. Grundsätzlich möglich sind auch Fasern aus an sich brennbarem Material, wie Jute. Dann ist es erforderlich, die Hülle mit einer Brandschutzbeschichtung zu versehen bzw. zu imprägnieren, die ohnehin auch wegen der Staubdichtigkeit bevorzugt ist. Mischungen für wasserfeste Brandschutzbeschichtungen sind bekannt.

Als Bindemittel sind vorzugsweise solche vorgesehen, die bei Temperaturen über 100 °C schmelzen oder sich unter Bildung einer klebrigen Masse zersetzen. Als solches Material eignen sich insbesondere thermoplastische Kunststoffe wie Polyamid (PA), Hochdruckpolyäthylen (LDPE), Niederdruckpolyäthylen (HDPE), Äthylenvinylacetat (EVAc), Polypropylen (PP), Polystyrol (PS), Polycarbonat (PC), Polyoxymethylen (POM). Bei Temperaturen über 600 °C erfolgt durch Zersetzung des Bindemittels und/oder Sinterung eines Teils des wärmeisolierenden Materials eine Erhärtung. Es reichen bereits geringe Mengen des Bindemittels aus, in der Regel 0,1 - 6 Gew.-Prozent, vorzugsweise 0,5 - 3,5 Gew.-Prozent.

Das wärmeisolierende Material und/oder das sich unter Wärmeeinwirkung ausdehnende Material sind im Brandschutzmaterial zu mehr als 90 Gew.-Prozent, vorzugsweise mehr als 95 Gew.-Prozent enthalten. Dabei können beide Materialien identisch sein, d.h. das wärmeisolierende Material kann auch eine Fähigkeit zur irreversiblen Ausdehnung besitzen. Vorzugsweise sind jedoch hierzu verschiedene Materialien vorgesehen, um eine günstige Abstimmung zu ermöglichen. Weiterhin enthält das Brandschutzmaterial mit Vorteil mindestens 80, insbesondere mindestens 95 Gew.-Prozent nicht brennbare Stoffe.

Das Ausdehnungsvermögen des erfindungsgemäßen Brandschutzmaterials ist von großer Bedeutung, weil dadurch automatisch eine Verfestigung der Ausfüllung der Durchbrüche bzw. Löcher erreicht wird. Hierdurch verkeilen sich beispielsweise die Säckchen in einer Maueröffnung, so daß sie auch bei Erschütterungen oder durch herabfallende Gegenstände nicht zum Herausfallen veranlaßt werden. Durch das Ausdehnungsverhalten werden zusätzlich Undichtigkeiten im Durchbruch, die durch Abbrennen, Schmelzen oder sonstige Volumenkontraktionen der durch den Durchbruch hindurchlaufenden Gegenstände (Kabel oder Rohre) entstehen, abgedichtet. Mit Vorteil richtet sich der Füllgrad der Beutel bzw. der Säckchen nach dem Ausdehnungsvermögen der Brandschutzmischung, so daß ein Platzen der Beutel infolge der Ausdehnung vermieden wird. Da jedoch die Brandsäckchen infolge der starken Wärmeisolierung des Brandschutzmaterials in aller Regel nicht mit ihrem gesamten Inhalt auf höhere Temperaturen erhitzt werden, sondern lediglich die dem Brand oder der Hitze unmittelbar ausgesetzten äußeren Schichten, kann das nicht ausgenützte Volumen der Beutel bzw. der Säckchen bei der Abfüllung des Brandschutzmaterials geringer gehalten werden als die maximale Ausdehnungsfähigkeit des Brandschutzmaterials. Das Brandschutzmaterial kann in seiner Zusammensetzung so abgestimmt sein, daß es ein Ausdehnungsvermögen von bis zu 600 Vol.-Prozent besitzt. Für gewöhnliche Anwendungszwecke reicht jedoch ein Ausdehnungsvermögen von 10 - 80 Vol.-Prozent aus. Danach richtet sich auch die Menge des sich unter Wärmeeinwirkung ausdehnenden Materials. Dieses ist, je nach seiner Ausdehnungsfähigkeit, vorzugsweise in Mengen von 1 - 50, vorzugsweise 3 - 25 Gew.-Prozent in dem Material enthalten. Bevorzugt sind ausdehnende Materialien auf anorganischer Basis, insbesondere mineralischer Basis, wie ungeblähter Vermiculit und/oder Perlit.

Bei besonderen Ausführungsformen kann das sich unter Wärmeeinwirkung ausdehnende Material auch organischer Natur sein und sich unter Aufblähung und Erstarrung zersetzen, wobei es auch Bindemitteleigenschaften entwickeln kann, so daß sich ein zusätzliches Bindemittel erübrigen kann. Als ein solches organisches, sich unter Hitzeeinwirkung ausdehnendes Material eignen sich bestimmte duroplastische Kunststoffe, wie Harnstoff-Formaldehydharze oder Melaminformaldehydharze, auch Melamin-Phosphorsäureverbindungen wie Monomelaminphosphat kommen in Frage, ggf. in Mischungen miteinander.

Besonders vorteilhaft werden anorganische und organische Quellmittel in Abmischung benutzt, wobei man sich die im Bereich von 200 bis 500 °C auftretende Expansion der organischen Substanzen und die bei 500 bis 1000 °C zu beobachtende Expansion der anorganischen Zusätze zunutze macht. Werden organische Materialien als Mittel zur Wärmeausdehnung verwendet, dann liegt deren Gewichtsanteil zweckmäßigerweise so niedrig, daß das Brandschutzmaterial dadurch noch nicht brennbar bzw. entflammbar wird. Grundsätzlich ist jedoch ein bestimmter Gehalt an organischem Material, das unter Hitzeeinwirkung verkohlt bzw. verkokt, von Vorteil. In der Regel liegt der Gehalt an organischen Bestandteilen bei 0,5 - 20, vorzugsweise 1 - 10 Gew.-Prozent.

Das wärmeisolierende Material, das normalerweise zu mehr als 80 Gew.-Prozent im Brandschutzmaterial enthalten ist, ist vorzugsweise ein solches auf anorganischer Basis. Es liegt in pulverförmiger, körniger und/oder faseriger Form vor. Besonders eignen sich mineralische Stoffe, wie Kieselgur, Blähton, Bims, Kreide, geblähter Perlit oder geblähter Vermiculit und anorganische Fasern, wobei die Fasern vorzugsweise eine Faserlänge von 1 - 15 mm besitzen. Sie können jedoch auch länger sein, wenn sie gewickelt sind und somit die Beweglichkeit bzw. Fließeigenschaften des losen Brandschutzmaterials nicht beeinträchtigen. Bei einer bevorzugten Ausführungsform besteht das wärmeisolierende Material aus Fasern, die zu einer verformbaren knolligen bis knäuelartigen Struktur geformt sind, wobei die Knollen eine Teilchengröße von ca. 1 - 17 mm besitzen. Die Knollen bzw. Wickel sind mindestens teilweise elastisch, so daß sie rückfedernde Eigenschaften aufweisen. Dadurch werden große Hohlräume geschaffen, die auch bei mehrfacher Handhabung des Brandschutzmaterials bzw. der damit gefüllten Säckchen nicht verloren gehen. Das heißt, das Material behält seine geringe Schüttdichte von weniger als 500 g/l, vorzugsweise weniger als 400 g/l, auch nach langer Zeit bei. Diese losen Knäuel können auch das Bindemittel und mindestens einen Teil des sich unter Wärmeeinwirkung ausdehnenden Materials mit einschließen, so daß dadurch eine Entmischung bei der Handhabung und Umfüllung verhindert wird. Die Fasern können in dem Knäuel gegenseitig fixiert sein, was beispielsweise durch das Entstaubungsmittel bewirkt sein kann. Die einzelnen Bestandteile des Brandschutzmaterials und auch der Hülle sind vorzugsweise halogenfrei.

Weitere Merkmale der Erfindung ergeben sich aus den nachfolgenden Beschreibungen von bevorzugten Ausführungsformen in Verbindung mit den Unteransprüchen. Hierbei können die einzelnen Merkmale jeweils für sich oder zu mehreren Kombinationen miteinander bei den Ausführungsformen verwirklicht sein.

Beispiel 1:

Ein Schlauchbeutel aus Glasfasergewebe mit 20 cm Breite und 35 cm Länge, der mit einer üblichen Brandschutzbeschichtung imprägniert ist, ist mit einer Mischung aus 30 Gew.-Prozent Glasfasern (Faserlänge 1,0 - 10 mm), 55 Gew.-Prozent Keramikfaser (Faserlänge 1,0 - 6,0 mm), 10 Gew.-Prozent Perlit, 3 Gew.-Prozent Formaldehydharnstoffharze, 1 Gew.-Prozent Hochdruckpolyäthylen (LDPE), Pulver und 1 Gew.-Prozent Mineralöl nur so weit gefüllt, daß er noch gut mit der Hand formbar ist und mehrere gefüllte Beutel, ohne Gefahr des Umfallens, flach übereinander stapelbar sind.

Die eingesetzten Fasern liegen in Form von flachovalen bis kugeligen voluminösen Knäueln vor, die einen Durchmesser von 1 - 15 mm, hauptsächlich 2 - 6 mm besitzen. In diese Knäuel sind das Bindemittel, das Entstaubungsmittel und ein Teil des Perlits sowie des Formaldehydharnstoffharzes eingebunden. Zur Herstellung der Füllung werden die festen Bestandteile zunächst trocken vorgemischt, wonach das Mineralöl, unter Fortsetzung des Mischvorganges, zugedüst wird, wobei die Knäuel gebildet werden und ihre Stabilität erhalten.

Beim einseitigen Erhitzen des Beutels auf über 100 °C erweicht zunächst das als Bindemittel dienende Hochdruckpolyäthylen (LDPE). Bereits bei Temperaturen knapp über 200 °C beginnt an den erhitzten Stellen eine örtliche Ausdehnung des Beutelinhalts, was zu einem dichten Verschließen der Öffnung führt. Bei weiter steigender Temperatur zersetzt sich das geschmolzene, mit den Fasern verklebte Hochdruckpolyäthylen (LDPE). Falls dann unter sehr starker Hitzeeinwirkung das Glasgewebe schmelzen sollte, dann hat sich das dahinterliegende Brandschutzmaterial oberflächlich bereits derartig verfestigt, daß ein Ausfließen des Beutelinhalts vermieden wird. Bei noch stärkerer Hitzeeinwirkung auf über 600 °C beginnt eine Sinterung der Fasern, verbunden mit einer Hautbildung und Verkrustung der Flächenteile, die den Flammen bzw. den Hitzestrahlen unmittelbar ausgesetzt sind, ohne daß die Isolationswirkung des tieferliegenden Materials beeinträchtigt wird. Dies hat zur Folge, daß die Hitze nur langsam in das Brandschutzmaterial eindringen kann, so daß die Mauerdurchbrüche einem Brand standhalten bzw. durch das Brandschutzmaterial geschützte Gegenstände nicht gefährdet werden.

Beispiel 2:

Ein Schlauchbeutel aus Glasfasergewebe entsprechend Beispiel 1 ist mit einer Mischung aus 82 Gew.-Prozent Mineralfasern (Faserlänge 1,0 - 8,0 mm), 5 Gew.-Prozent Vermiculit, 10 Gew.-Prozent Perlit, 2 Gew.-Prozent EVAcPulver und 1 Gew.-Prozent Silikonöl in der bereits genannten Art und Weise gefüllt.

Die Mineralfasern liegen wiederum in Form von flachovalen bis kugeligen voluminösen Knäueln vor, die eine Größe von 1 - 17 mm, hauptsächlich 2 - 7 mm besitzen. Bindemittel, Entstaubungsmittel und ein Teil des Vermiculits sowie Perlits sind wiederum in diese Knäuel eingebunden. Zur Herstellung der Mischung gilt das bei Beispiel 1 Gesagte. Beim einseitigen Erhitzen des Beutels auf über 100 °C erweicht zunächst das als Bindemittel dienende Äthylenvinylacetat. Bereits bei Temperaturen über 200 °C beginnt die Expansion des Beutelinhalts. Bei weiter steigender Temperatur zersetzt sich das geschmolzene mit den Mineralfasern verklebte Äthylenvinylacetat. Bei etwa 500 °C setzt sodann die Blähwirkung des Perlits ein. Die Mineralfaser beginnt sich bei Temperaturen von mehr als 600 °C zu verfestigen, so daß ein Ausfließen des Beutelinhalts infolge Schmelzens des Glasfasergewebes unter sehr starker Hitzeeinwirkung vermieden wird.

Beispiel 3:

Ein Schlauchbeutel aus Glasfasergewebe entsprechend Beispiel 1, ist mit einer Mischung aus 45 Gew.-Prozent Glasfaser (Faserlänge 1,0 - 10,0 mm), 15 Gew.-Prozent expandiertem Vermiculit, 31 Gew.-Prozent Keramikfaser (Faserlänge 1,0 - 6,0 mm), 5 Gew.-Prozent Vermiculit, 1 Gew.-Prozent Formaldehydharnstoffharz, 2 Gew.-Prozent Polyamidpulver und 1 Gew.-Prozent Mineralöl in vorher genannter Weise gefüllt. Die Fasern liegen ebenfalls in flachovalen bis kugeligen voluminösen Knäueln vor, die eine Größe von 1 - 15 mm, hauptsächlich 2 - 6 mm besitzen. In diese Knäuel sind das Bindemittel, das Entstaubungsmittel und ein Teil der sich ausdehnenden Substanzen eingebunden. Die Herstellung der Mischung erfolgt in der bereits genannten Weise.

Beim Erhitzen des Beutels auf über 100 °C erweicht zunächst das als Bindemittel dienende Polyamid. Bei Temperaturen über 200 °C beginnt an den erhitzten Stellen die örtliche Ausdehnung des Beutelinhalts. Da bei Temperaturen über 600 °C die Glasfaser zu sintern beginnt, kommt es zu einer Verfestigung des gesamten Beutelinhalts, wodurch ein Ausfließen der Mischung im Falle starker Hitzeeinwirkung auf das Glasgewebe und daraus resultierendem Schmelzen vermieden wird.

**Patentansprüche**

1. Wasser- und witterungsbeständiges Brandschutzmaterial in loser Form, dadurch gekennzeichnet, daß es

   a) mindestens ein bei Temperaturen bis 1100 °C wärmeisolierendes Material in Form von nicht brennbaren, pulverförmigen, körnigen und/oder faserförmigen Stoffen auf anorganischer Basis,
   b) mindestens ein sich bei Temperaturen über 150 °C, insbesondere über 200 °C, irreversibel ausdehnendes Material auf Basis von anorganischen, nicht brennbaren Verbindungen oder Materialien oder Mischungen hieraus und/oder organischen wasserbeständigen, bei erhöhter Temperatur quellenden, insbesondere sich unter Bildung eines Kohlenstoffgerüstes bzw. Kohlenstoffschaumes zersetzenden Verbindungen, und
   c) mindestens ein vorzugsweise feinteiliges Bindemittel, das bei Temperaturen bei 100 bis 300 °C wärmewirksam ist und die anderen Komponenten verklebt,

   enthält, wobei das wärmeisolierende und das sich ausdehnende Material zu mehr als 90 Gew.-Prozent in Brandschutzmaterial enthalten sind, und das Brandschutzmaterial ein Ausdehnungsvermögen beim Erhitzen von Raumtemperatur auf 1100 °C von mindestens 5 Vol.-Prozent besitzt und sämtliche Bestandteile zumindest im noch nicht erhitzten Zustand wasser- und witterungsbeständig sind.

2. Brandschutzmaterial nach Anspruch 1, dadurch gekennzeichnet, daß es ein vorzugsweise flüssiges und/oder klebriges Entstaubungsmittel enthält.

3. Brandschutzmaterial nach Anspruch 1 oder 2, dadurch gekennzeichnet, daß es in einer flexiblen, insbesondere kissenförmigen Hülle enthalten ist, die vorzugsweise schwer entflammbar bis nicht brennbar ist und insbesondere aus Fasermaterial, vorzugsweise in Form eines Gewebes, gefertigt ist, wobei die Hülle insbesondere staubdicht ist und vorzugsweise mit einer wasserfesten mindestens schwer entflammbaren Beschichtung versehen ist.

4. Brandschutzmaterial nach einem der vorhergehenden Ansprüche, dadurch gekennzeichnet, daß das Bindemittel in Mengen von 0,1 - 6 Gew.-Prozent, insbesondere 0,5 - 3,5 Gew.-Prozent enthalten ist und in Pulver- oder Granulatform vorliegt und vorzugsweise schmelzbare und sich bei Temperaturen über 200 °C zersetzende Kunststoffe als Bindemittel vorgesehen sind.

5. Brandschutzmaterial nach einem der vorhergehenden Ansprüche, dadurch gekennzeichnet, daß sich mindestens ein Bestandteil nach Hitzeeinwirkung, insbesondere bei Temperaturen über 600 °C nach vorherigem Klebrigwerden unter Zersetzung verfestigt, so daß das Brandschutzmaterial zu einem porösen und harten Block erstarrt.

6. Brandschutzmaterial nach einem der vorhergehenden Ansprüche, dadurch gekennzeichnet, daß das wärmeisolierende Material und das sich ausdehnende Material zu mehr als 95 Gew.-Prozent im Brandschutzmaterial enthalten sind.

7. Brandschutzmaterial nach einem der vorhergehenden Ansprüche, dadurch gekennzeichnet, daß es bei Erwärmung auf Temperaturen im Bereich von 200 - 1100 °C ein Ausdehnungsvermögen von 5 - 600 Vol.-Prozent, vorzugsweise 10 - 80 Vol.-Prozent, besitzt und das sich unter Wärmeeinwirkung ausdehnende Material vorzugsweise in Mengen von 1 - 50, insbesondere 3 - 25, Gew.-Prozent, enthalten ist.

8. Brandschutzmaterial nach einem der vorhergehenden Ansprüche, dadurch gekennzeichnet, daß als sich unter Wärmeeinwirkung ausdehnendes anorganisches Material Perlit und/oder Vermiculit vorgesehen sind.

9. Brandschutzmaterial nach einem der vorhergehenden Ansprüche, dadurch gekennzeichnet, daß als sich unter Wärmeeinwirkung ausdehnendes organisches Material Harnstoff-Formaldehydharze, Melaminformaldehydharze und Melamin-Phosphorsäure-Verbindungen, wie Monomelaminphosphat, in wasserunlöslicher oder wasserunlöslich gemachter Form vorgesehen sind.

10. Brandschutzmaterial nach einem der vorhergehenden Ansprüche, dadurch gekennzeichnet, daß es als wärmeisolierendes Material Kieselgur, Blähton, Bims, Kreide, geblähter Perlit, geblähter Vermiculit und/oder anorganische Fasern, insbesondere Mineralfasern, Schlakkenfasern, Glasfasern, Keramikfasern enthält, wobei das wärmeisolierende Material vorzugsweise eine verformbare knollige bis knäuelartige Struktur besitzt, insbesondere Fasern zu Knäueln bzw. Knollen geformt bzw. gewickelt sind.

11. Brandschutzmaterial nach einem der vorhergehenden Ansprüche, dadurch gekennzeichnet, daß Knäuel bzw. Knollen aus dem wärmeisolierenden Material eine Größe von 1 - 17 mm besitzen und vorzugsweise das Bindemittel, mindestens ein Teil des sich unter Wärmeeinwirkung ausdehnenden Materials und ggf. das Entstaubungsmittel enthalten.

**Claims**

1. Waterproof and weatherproof fire prevention material in loose form, characterized in that it contains

a) at least one material which is thermally insulating at temperatures up to 1100 °C in the form of inflammable, pulverulent, granular and/or fibrous materials having an inorganic base,

b) at least one material irreversibly expanding at temperatures above 150 °C and in particular above 200 °C, based on inorganic, inflammable compounds or materials or mixtures therefrom and/or organic, water-resistant compounds, which swell at elevated temperatures and which in particular docompose accompanied by the formation of a carbon skeleton or carbon foam and

c) at least one preferably finely divided binder, which is heat-active at temperatures of 100 to 300 °C and bonds the other components,

in which the thermally insulating and the expanding material are contained in a proportion of more than 90% by weight in the fire prevention material and that the latter has an expansion capacity on heating from ambient temperature to 1100 °C of at least 5% by volume and all the constituents are waterproof and weatherproof at least in the unheated state.

2. Fire prevention material according to claim 1, characterized in that it contains a preferably liquid and/or tacky dedusting agent.

3. Fire prevention material according to claims 1 or 2, characterized in that it is contained in a flexible, particularly a pad-like envelope, which is preferably difficultly flammable to inflammable and which is in particular made from fibrous material, preferably in the form of a fabric, the envelope being in particular dust-tight and being preferably provided with a watertight and at least difficultly flammable coating.

4. Fire prevention material according to one of the preceding claims, characterized in that the binder is contained in quantities of 0.1 to 6% by weight and in particular 0.5 to 3.5% by weight and is in powder or granule form and preferably meltable plastics decomposing at temperatures over 200°C are provided as binders.

5. Fire prevention material according to one of the preceding claims, characterized in that at least one constituent hardens after heat action, particularly at temperatures over 600°C and after previously making tacky and accompanied by decomposition, so that the fire prevention material solidifies to form a porous, hard block.

6. Fire prevention material according to one of the preceding claims, characterized in that the thermally insulating material and the expanding material are contained in a proportion of more than 95% by weight in the fire prevention material.

7. Fire prevention material according to one of the preceding claims, characterized in that on heating to temperatures in the range 200 to 1100°C it has an expansion capacity of 5 to 600 and preferably 10 to 80% by volume and that the material expanding under heat action is preferably contained in quantities of 1 to 50 and in particular 3 to 25% by weight.

8. Fire prevention material according to one of the preceding claims, characterized in that as the inorganic material expanding under heat action perlite and/or vermiculite are provided.

9. Fire prevention material according to one of the preceding claims, characterized in that as the organic material expanding under heat action are provided urea-formaldehyde resins, melamine-formaldehyde resins and melamine-phosphoric acid compounds, such as monomelamine phosphate, in water-insoluble form or brought into a water-insoluble form.

10. Fire prevention material according to one of the preceding claims, characterized in that it contains as the thermally insulating material kieselguhr, expanded clay, pumice, chalk, swollen perlite, swollen vermiculite and/or inorganic fibres, particularly mineral fibres, slag fibres, glass fibres or ceramic fibres and the thermally insulating material preferably has a deformable lumpy to ball-like structure and in particular the fibres are shaped or wound to form balls or lumps.

11. Fire prevention material according to one of the preceding claims, characterized in that the balls or lumps of thermally insulating material have a see of 1 to 17 mm and preferably contain the binder, at least part of the material expanding under heat action and optionally the dedusting material.

**Revendications**

1. Matériau de protection contre le feu résistant à l'eau et aux agents atmosphériques, sous forme détachée, caractérisé en ce qu'il contient
a) au moins un matériau isolant thermique à des températures pouvant atteindre 1100°C, sous forme de substances non combustibles pulvérulentes, granulées et/ou fibreuses à base inorganique,
b) au moins un matériau dilatable de manière irréversible à des températures supérieures à 150°C, en particulier à 200°C, à base de composés ou de matériaux inorganiques non combustibles ou de leurs mélanges et/ou de composés organiques résistant à l'eau, qui, lorsque la température augmente, gonflent et en particulier se décomposent en formant une structure carbonée ou une mousse carbonée, et
c) au moins un liant de préférence finement divisé qui présente une action thermique à des températures de 100 à 300°C et colle les autres composants,
le matériau isolant thermique et le matériau qui se dilate étant contenus dans le matériau de protection contre le feu à raison de plus de 90% en poids, et le matériau de protection contre le feu ayant un pouvoir de dilatation d'au moins 5% en volume pour un échauffement depuis la température ambiante jusqu'à une température de 1100°C, et l'ensemble des composants étant résistants à l'eau et aux agents atmosphériques, du moins à l'état non encore échauffé.

2. Matériau de protection contre le feu selon la revendication 1, caractérisé en ce qu'il contient de préférence un dépoussiérant de préférence liquide et/ou visqueux.

3. Matériau de protection contre le feu selon la revendication 1 ou 2, caractérisé en ce qu'il est contenu dans une enveloppe flexible, en particulier en forme de matelas, qui de préférence est difficilement inflammable à non combustible, composée en particulier de matière fibreuse, de préférence sous forme d'un tissu, et qui est en particulier étanche aux poussières et de préférence pourvue d'un revêtement résistant à l'eau au moins difficilement inflammable.

4. Matériau de protection contre le feu selon l'une des revendications précédentes, caractérisé en ce que le liant est présent à raison de 0,1 à 6% en poids, en particulier 0,5 à 3,5% en poids et sous forme de poudre ou de granulat, et comporte de préférence comme liant des matières synthétiques fusibles et se décomposant à des températures supérieures à 200°C.

5. Matériau de protection contre le feu selon l'une des revendications précédentes, caractérisé en ce qu'après l'action de la chaleur, en particulier à des températures supérieures à 600°C, au moins un composant se solidifie en se décomposant, après être d'abord devenu visqueux, si bien que le matériau de protection contre le feu se rigidifie en une masse poreuse et dure.

6. Matériau de protection contre le feu selon l'une des revendications précédentes, caractérisé en ce qu'il contient le matériau isolant thermique et le matériau dilatable à raison de plus de 95% en poids.

7. Matériau de protection contre le feu selon l'une des revendications précédentes, caractérisé en ce qu'il possède un pouvoir de dilatation de 5 à 600% en volume, de préférence de 10 à 80% en volume pour un échauffement à des températures de l'ordre de 200 à 1100°C, et que le matériau qui se dilate sous l'action de la chaleur est contenu à raison de 1 à 50, de préférence 3 à 25% en poids.

8. Matériau de protection contre le feu selon l'une des revendications précédentes, caractérisé en ce qu'il est prévu, comme matériau inorganique se dilatant sous l'action de la chaleur, de la perlite et/ou de la vermiculite.

9. Matériau de protection contre le feu selon l'une des revendications précédentes, caractérisé en ce qu'on prévoit, comme matériau organique se dilatant sous l'action de la chaleur, des résines d'urée-formaldéhyde, des résines de mélamineformaldéhyde et des composés de mélamine - acide phosphorique comme le monophosphate de mélamine sous forme insoluble ou rendue insoluble dans l'eau.

10. Matériau de protection contre le feu selon l'une des revendications précédentes, caractérisé en ce qu'il contient comme matériau isolant thermique du Kieselguhr, de l'argile expansée, de la pierre ponce, de la craie, de la perlite expansée, de la vermiculite expansée et/ou des fibres inorganiques, en particulier des fibres minérales, des fibres de scories, des fibres de verre, des fibres céramiques, le matériau isolant thermique possédant de préférence une structure déformable à noeuds ou à pelotes, en particulier des fibres formées ou enroulées en noeuds ou en pelotes.

11. Matériau de protection contre le feu selon l'une des revendications précédentes, caractérisé en ce que les pelotes ou noeuds de matériau isolant thermique possèdent une dimension de 1 à 17 mm et contiennent de préférence le liant, au moins une partie du matériau qui se dilate sous l'action de la chaleur, et éventuellement le dépoussiérant.